## Europäisches Patentamt
## European Patent Office
## Office européen des brevets

(11) Publication number: **0 165 347**
**B1**

(12) # EUROPEAN PATENT SPECIFICATION

(45) Date of publication of patent specification: **12.09.90**

(51) Int. Cl.⁵: **H 02 H 9/04, H 02 H 9/06**

(21) Application number: **84304104.7**

(22) Date of filing: **18.06.84**

(54) Protection circuit for a power distribution system.

(43) Date of publication of application:
**27.12.85 Bulletin 85/52**

(45) Publication of the grant of the patent:
**12.09.90 Bulletin 90/37**

(84) Designated Contracting States:
**AT BE CH DE FR GB IT LI LU NL SE**

(56) References cited:
**EP-A-0 050 966**
**FR-A-1 175 318**
**GB-A-1 436 625**

**Lexikon der Technik Lueger Band 2, 4. Auflage page 198**

(73) Proprietor: **ONEAC CORPORATION**
**27944 North Bradley Road**
**Libertyville Illinois 60048 (US)**

(72) Inventor: **McCartney, Thomas**
**1700 Mountain Court**
**Deerfield Illinois 60015 (US)**

(74) Representative: **Bauer, Robert, Dipl.-Ing. et al**
**Boeters & Bauer Patentanwälte Bereiteranger 15**
**D-8000 München 90 (DE)**

Courier Press, Leamington Spa, England.

## Description

The present invention, in one embodiment, relates to a protective circuitry in accordance with the introductory clause of claim 1.

Such circuitry is known from EP—A—0 050 966. This known circuitry is effective to suppress any transient voltage above a rated clamping voltage of the respective transient voltage suppressors which may be shortly above the peak line voltage. Additionally this circuitry can be arranged to provide fault protection using a single circuit-breaking device for the life, neutral and ground conductors that is activated in response to a fault between any of those conductors. It may, however, have an undesirable low impedance to ground, this being an important consideration in conforming to existing safety standards.

Accordingly the present invention aims to obtain high impedance to ground whenever the circuitry is not activated by a transient voltage to be suppressed.

This is achieved by a gas discharge tube connected in series with the transient voltage suppressor connected betwen the ground conductor and the common circuit point, as specified in claim 1.

As soon as the transient voltage to be suppressed falls below the rated clamping level of the circuitry which is approximately equal to the peak line voltage the gas discharge tube is extinguished and thus forms an extraordinarily high impedance to ground.

The use of a gas discharge tube is proposed also in the aforementioned EP—A—0 050 966, but in this case the gas discharge tube is to be connected in parallel to its respective transient voltage suppressor to form an additional surge suppressor. It thus cannot provide an elevated impedance to ground in any of its operation conditions.

In GB—A—1 436 625 a protective circuitry is disclosed including two gas discharge tubes connected between ground and a circuit point each which is also connected through ordinary diodes to each of a plurality of line conductors. In this case the gas discharge tubes themselves form clamping elements for either of the two half periods of the AC line voltage.

Finally, FR—A—1 175 318 discloses a protective circuitry for a power supply system including a plurality of life conductors in addition to a ground conductor where each conductor is connected to a common circuit point through a lightning arrester ("parafoudre") including a non-linear resistor in series with a spark gap element. Apparently the spark gap element in ordinary operation of the circuit provides a high impedance insulation against ground but, again, the actual suppressor is formed by the spark gap element.

In each of these latter cases the discharge, once it exists, will continue until the next zero-crossing of the AC line voltage and thus, even in a case where the transient is of a very short duration, considerable discontinuities will be effected in the output wave/form and, where a circuit-breaker is provided, this would undoubtedly be activated. In contrast thereto, in the case of the present invention, the gas discharge tube which does not form part of the clamping circuit proper, is extinguished immediately when the transient voltage falls below a level approximately equal to the clamp voltage rating of the suppressors and thus does not remain conductive until the next zero crossing of the AC line voltage aside from the fact that a single gas discharge tube is required to effect the desired insulation in relation to ground.

In another embodiment of the present invention as claimed in claim 2, in a very similar circuitry as that one of claim 1, three transient voltage suppressors are provided in the form of bi-directional clamping elements. These suppressors may be selected thus that the clamping voltage is only one-half of that one of the suppressors of claim 1.

The dependent claims specify improvements in addition to those mentioned in claim 1 and/or claim 2.

In the following two respective embodiments will be described in more detail in connection with the drawing. In this drawing

Fig. 1 is a circuit schematic showing a protective circuitry in accordance with claim 1 and,

Fig. 2 is a circuit schematic showing a protective circuitry in accordance with claim 2.

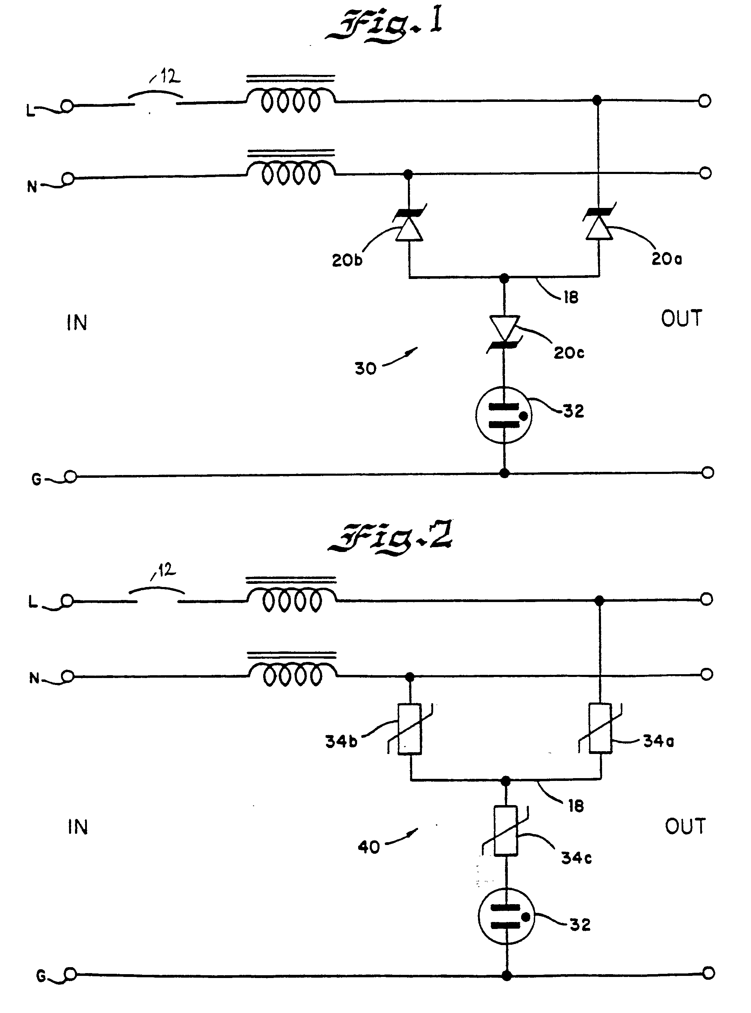

The circuitry shown in Fig. 1 comprises a circuit-breaking device 12 and protective circuitry 30 including a gas discharge tube 32 or similar device that is connected in series with a transient voltage suppressor 20c provided between a common circuit point 18 and a ground line G. Similar transient voltage suppressors 20a and 20b are connected respectively between a live line L and the common circuit point 18 and between a neutral line N and the common circuit point 18. These suppressors 20a and 20b clamp normal mode transients appearing between the live line L and the neutral line N while the suppressor 20c through the gas discharge tube 32, clamps common mode transients such as transients that appear arcoss both the live line L and the neutral line N with respect to the ground line G.

The gas discharge tube 32, when not conductive, provides a very high impedance to the ground line G. The high impedance to ground is an important consideration to satisfy existing safety standards as currently defined. When a high voltage transient is present, the gas discharge tube 32 is immediately extinguished when the transient falls below a level approximately equal to the peak line voltage due to the clamp voltage ratings of the suppressor 20c and either the suppressor 20a or 20b. Accordingly, in contrast to conventional gas discharge tube protection circuits such as that one described in GB—A—1 436 625, the gas discharge tube 32 does not remain conductive until the next zero crossing of the AC line voltage and therefore avoids discontinuities in the output waveform and the possibility of activating the line circuit breaker.

Referring now to Fig. 2 which shows another embodiment of the present invention, protective circuitry 40 includes transient voltage suppressors 34a, 34b, and 34c and a gas discharge tube 32 connected in series with the suppressor 34c. The transient voltage suppressors 34a, 34b, and 34c are bi-directional suppressor devices such as varistors, for example metal oxide varistors, or bi-directional transient voltage suppressors made up of back-to-back p-n junction silicon devices. In addition to any such devices, another specific type of suitable bi-directional transient voltage suppressor is available from General Semiconductor Industries, Inc. sold under the Trademark TRANS-ZORB as device types 1.5KE7.5C through 1.5KE400C.

The protective circuitry 40 provides the same degree of transient protection as the protective circuitry 30 of Fig. 1 and additionally allows the utilization of bi-directional suppressor devices as the suppressors 34a, 34b, and 34c that have a rated bi-directional clamp voltage of only one-half the rating of the suppressors 20a, 20b, and 20c of Fig. 1. For example, the voltage rating of the suppressors 34a, 34b, and 34c is less than the peak line voltage and a predetermined amount greater than one-half of the peak line voltage. Thus, in a specific application for 120 VAC line operation, a clamp voltage rating of 100 to 110 volts for each of the suppressors 34a, 34b and 34c, is suitable.

Although not shown in the Figures, the circuitry may include filter capacitors, a capacitor being connected in parallel with each transient voltage suppressor 20a, 20b, 20c or 34a, 34b, 34c.

In the circuitry 30 of Figure 1 the capacitors may be polarized cqpacitors, having their positive lead connected to the cathode of the associated transient voltage suppressor 20a, 20b or 20c.

In the circuitry 40 of Figure 2 the filter capacitor connected in parallel with the transient voltage suppressor 34c may also shunt the gas discharge tube 32.

## Claims

1. Protective circuitry (30) suitable for protecting power distribution systems in the form of protection and filtering circuits, where said power distribution system has a live conductor (L), a neutral conductor (N), a ground conductor (G) and a circuit-breaking device (12) in either the live or the neutral conductor, said protective circuitry (30) including three transient voltage suppressors (20a, 20b, 20c) which have a forward diode characteristic and which are connected respectively between a common circuit point (18) and one of said conductors (L, N, G), their forward directions being similarly directed in relation to said common circuit point, characterized in that a gas discharge tube (32) is connected in series with the transient voltage suppressor (20c) which is connected between the ground conductor (G) and said common circuit point (18).

2. Protective circuitry (40) suitable for protecting power distribution systems in the form of protection and filtering circuits, where said power distribution system has a live conductor (L), a neutral conductor (N), a ground conductor (G) and a circuit-breaking device (12) in either the live or the neutral conductor, said protective circuitry (40) including three transient voltage suppressors (34a, 34b, 34c) connected respectively between a common circuit point (18) and one of said conductors (L, N, G), characterized in that said transient voltage suppressors (34a, 34b, 34c) each have a bi-directional clamping characteristic for conduction when the voltage across said transient voltage suppressor in any of its two possible directions exceeds a predetermined value and that a gas discharge tube (32) is connected in series with the transient voltage suppressor (34c) which is connected between the ground conductor (G) and said common circuit point (18).

3. Protective circuitry as claimed in claim 1 or 2, wherein a filter capacitor is connected in parallel across each of said transient voltage suppressors (20a, 20b, 20c; 34a, 34b, 34c).

4. Protective circuitry as claimed in claims 1 and 3, wherein said filter capacitors are polarized capacitors which have their positive terminal connected to the cathode lead of their respective transient voltage suppressor (20a, 20b, 20c).

5. Protective circuitry as claimed in claims 2 and 3, in which the filter capacitor connected in parallel with the transient voltage suppressor (34c) which is connected in series with said gas discharge tube (32) also shunts said gas discharge tube.

## Patentansprüche

1. Zum Schutz von Energieverteilungssystemen in Form von Schutz- und Filterschaltungen geeignete Schutzschaltung (30), wobei das Energieverteilungssystem einen spannungsführenden Leiter (L), einen neturalen Leiter (N), einen Erdleiter (G) und einen Leiteungsunterbrecher (12) in dem spannungsführenden oder dem neutralen Leiter aufweist und die Schutzschaltung (30) drei Spannungsspitzenunterdrücker (20a, 20b, 20c) enthält, die eine Gleichricht-Diodencharakteristik aufweisen, zwischen einem gemeinsamen Schaltungspunkt (18) und einem der genannten Leiter (L, N, G) liegen und in bezug auf den gemeinsamen Schaltungspunkt gleiche Durchlaßrichtungen besitzen, dadurch gekennzeichnet, daß eine Gasentladungsröhre (32) in Reihe mit dem Spannungsspitzenunterdrücker (20c) geschaltet ist, der zwischen dem Erdleiter (G) und dem gemeinsamen Schaltungspunkt (18) liegt.

2. Zum Schütz von Energieverteilungssytemen in Form von Schutz- und Filterschaltungen geeignete Schutzschaltung (40), wobei das Energieverteilungssystem einen spannungsführenden Leiter (L), einen neutralen Leiter (N), einen Erdleiter (G) und einen Leitungsunterbrecher (12) in dem spannungsführenden oder dem neutralen Leiter aufweist und die Schutzschaltung (40) drei Spannungsspitzenunterdrücker (34a, 34b, 34c) zwischen einem gemeinsamen Schaltungspunkt (18) und einem der genannten Leiter (L, N, G) enthält, dadurch gekennzeichnet, daß die Spannungsspitzenunterdrücker (34a, 34b, 34c) jeweils in beiden Richtungen leitfähig sind, wenn die Spannung an dem betreffenden Spannungsspitzenunterdrücker in einer seiner zwei möglichen Richtungen einen vorbestimmten Wert überschreitet, und daß eine Gasentladungsröhre (32) in Reihe mit dem Spannungsspitzenunterdrücker (34c) geschaltet ist, der zwischen dem Erdleiter (G) und dem gemeinsamen Schaltungspunkt (18) liegt.

3. Schutzschaltung nach Anspruch 1 oder 2, worin ein Filterkondensator einem jeden der Spannungsspitzenunterdrücker (20a, 20b, 20c; 34a, 34b, 34c) parallelgeschaltet ist.

4. Schutzschaltung nach den Ansprüche 1 und 3, worin die genannten Filterkondensatoren polarisierte Kondensatoren sind, deren positive Klemme mit dem Katodenanschluß ihres zugeordneten Spannungsspitzenunterdrückers (20a, 20b, 20c) verbunden ist.

5. Schutzschaltung nach den Ansprüchen 2 und 3, in welcher der dem Spannungsspitzenunterdrücker (34a), der in Reihe mit der Gasentladungsröhre (32) liegt, parallelgeschaltete Filterkondensator auch die Gasentladungsröhre (32) überbrückt.

## Revendications

1. Réseau de protection (30), adapte à la protection d'installations de distribution de courant ayant la forme de circuits de protection et de filtrage, dans lequel ladite installation de distribution de courant possède un conducteur de phase (L), un conducteur de neutre (N), un conducteur de masse (G) et un dispositif disjoncteur (12) situé soit dans le conducteur de phase, soit dans le conducteur de neutre, ledit réseau de protection (30) comprenant trois dispositifs de suppression de tensions transitoires (20a, 20b, 20c) qui ont la caractéristique d'une diode en direct et sont respectivement connectés entre un point commun (18) du circuit et l'un des conducteurs (L, N, G), leur sens direct étant le même par rapport audit point commun du circuit, caractérisé en ce qu'un tube (32) de décharge à gaz est monté en série avec le dispositif de suppression de tensions (20c) qui est connecté entre le conducteur de masse (G) et ledit point commun (18) du circuit .

2. Réseau de protection (40) pour protéger des installations de distribution de courant ayant la forme de circuits de protection et de filtrage, dans lequel ladite installation de distribution de courant possède un conducteur (L) de phase, un conducteur de neutre (N), un conducteur de masse (G) et un dispositif disjoncteur (12) situé soit dans le conducteur de phase, soit dans le conducteur de neutre, ledit réseau de protection (40) comprenant trois dispositifs de suppression de tensions transitoires (34a, 34b, 34c) respectivement connectés entre un point commun du circuit (18) et l'un desdits conducteurs (L, N, G), caractérisé en ce que lesdits dispositifs de suppression de tensions transitoires (34a, 34b, 34c) présentent respectivement des caractéristiques de limitation bidirectionnelle en vue d'une conduction lorsque la tension dans ledit dispositif de suppression de tensions dans l'une de ses deux directions possibles dépasse une valeur determinée, et en ce qu'un tube (32) de décharge à gaz est monté en série avec le dispositif de suppression de tensions transitoires (34c) qui est connecté entre le conducteur de masse (G) et ledit point commun du circuit (18).

3. Réseau de protection selon la revendication 1 ou 2, dans lequel une capacité de filtrage est connectée en parallèle sur chacun des dispositifs de suppression de tensions transitoires (20a, 20b, 20c; 34a, 34b, 34c).

4. Réseau de protection selon les revendications 1 et 3, dans lequel lesdites capacités de filtrage sont des capacités polarisées dont la borne positive est connectée au fil de la cathode de leur dispositif de suppression de tensions transitoires respectif (20a, 20b, 20c).

5. Réseau de protection selon les revendications 2 et 3, dans lequel la capacité de filtrage, connectée en parallèle au dispositif de suppression de tensions transitoires (34c) qui est connectée en série audit tube (32) de décharge à gaz, vient également en dérivation par rapport audit tube (32) de décharge à gaz.

# *Fig.* 1

# *Fig.* 2